(19) Europäisches Patentamt
European Patent Office
Office européen des brevets

(11) Veröffentlichungsnummer: **0 319 473 B1**

(12) **EUROPÄISCHE PATENTSCHRIFT**

(45) Veröffentlichungstag der Patentschrift: **31.08.94**

(51) Int. Cl.[5]: **C08G 59/40**, C08G 59/68, C08G 18/58

(21) Anmeldenummer: **88810799.2**

(22) Anmeldetag: **23.11.88**

Die Akte enthält technische Angaben, die nach dem Eingang der Anmeldung eingereicht wurden und die nicht in dieser Patentschrift enthalten sind.

(54) **Hitzehärtbare Reaktivsysteme.**

(30) Priorität: **02.12.87 CH 4707/87**

(43) Veröffentlichungstag der Anmeldung:
**07.06.89 Patentblatt 89/23**

(45) Bekanntmachung des Hinweises auf die Patenterteilung:
**31.08.94 Patentblatt 94/35**

(84) Benannte Vertragsstaaten:
**CH DE FR GB IT LI NL SE**

(56) Entgegenhaltungen:
**EP-A- 0 129 787**
**EP-A- 0 138 769**
**FR-A- 2 454 452**

(73) Patentinhaber: **CIBA-GEIGY AG**
**Klybeckstrasse 141**
**CH-4002 Basel (CH)**

(72) Erfinder: **Eldin, Sameer H., Dr.**
**Route de Schiffenen 10**
**CH-1700 Fribourg (CH)**
Erfinder: **Renner, Alfred, Dr.**
**Marcoup 2**
**CH-3286 Muntelier (CH)**

**EP 0 319 473 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft hitzehärtbare Reaktionsharzmischungen enthaltend Polyepoxide, Polyisocyanate, eine Cyanacetamidverbindung als Reaktionsbeschleuniger, sowie gegebenenfalls Füllstoffe und/oder übliche Additive und die Verwendung von Cyanacetylverbindungen als Härter für solche Reaktionsmischungen.

Aus der DE-OS 3,323,084 ist bekannt, dass als Reaktions-Beschleuniger für Reaktionsharzmischungen aus Polyepoxiden und Polyisocyanaten (EP/IC-Harze) mit einem Ansatzmolverhältnis EP:IC von 1 bis 5 tertiäre Amine und Imidazole sowie Oniumsalze von tertiären Aminen und Imidazolen, Additionskomplexe von Bortrihalogeniden mit tertiären Aminen und Imidazolen oder mit Elektronenakkzeptoren desaktivierte tertiäre Amine und Imidazole verwendet werden.

In der EP-A 130,454 sind als Härter für solche EP/IC-Harze die $BF_3$- und $BCl_3$-Komplexe von n-Octyldimethylamin sowie von Benzyldimethylamin und weiter 7,7,8,8-Tetracyanochinodimethan/1-Cyanethyl-2-Phenyl-Imidazol als Vertreter eines desaktivierten Imidazol-Beschleunigers spezifisch aufgeführt.

Ferner werden in der DE-OS 3,323,153 Amine, insbesondere tert. Amine und Imidazole als besonders geeignete Reaktionsbeschleuniger für spezielle EP/IC-Harze beschrieben, die als zusätzliche Epoxidharzkomponente Polyoxyalkylenglykolpolyglycidylether zur Verbesserung der thermischmechanischen Eigenschaften der Harze aufweisen.

Weiter sind aus der DE-OS 2,846,123 Cyanessigsäureester und -amide als Härter für Epoxidharze in der Wärme bekannt.

Nachteilig ist jedoch, dass die Reaktivharzsysteme, die Borhalogenid/Amin-Komplexe als Reaktionsbeschleuniger enthalten, eine schlechte Feuchtigkeitsresistenz aufweisen. Dies führt z.B. für eine Kombination von 3-4 % $BF_3$/Monoethylamin mit einem Epoxidharz bei 96 % relativer Feuchtigkeit bei 70 °C zu einem sehr markanten Anstieg des dielektrischen Verlustfaktors. Ferner können sich durch Hydrolyse der entsprechenden Borhalogenide hochkorrosive Gase wie HCl und HF bilden, was für die Anwendung auf dem Gebiet der Elektrotechnik und Elektronik nachteilig ist.

Zudem besteht ein Bedürfnis nach EP/IC-Harzsystemen mit Reaktionsbeschleunigern , die bei der Verarbeitungstemperatur einen langsamen Reaktionsverlauf aufweisen, d.h. eine längere Verarbeitungsdauer ermöglichen und auch eine bessere Lagerstabilität zeigen. Ebenfalls wichtig für die Anwendung solcher EP/IC-Harzsysteme auf dem Gebiet der Elektrotechnik und Elektronik ist eine gute Wärmealterungsbeständigkeit.

Ueberraschend weisen nun Cyanacetamid-Beschleuniger in reaktiven EP/IC-Harzsystemen die gewünschten, vorstehend dargestellten, Eigenschaften auf.

Die vorliegende Erfindung betrifft hitzehärtbare Reaktivsysteme enthaltend

a) mindestens ein Epoxidharz
b) mindestens ein Isocyanatharz
c) einen Reaktionsbeschleuniger der Formel I,

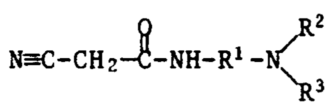

I

worin $R^1$ $-(CR^4R^5)_n-$ mit n = 2-24,
unsubstituiertes oder durch ein oder mehrere Halogen, Nitro, $C_1$-$C_4$-Alkyl, $C_1$-$C_4$-Alkoxy oder $C_3$-$C_8$-Dialkylaminoalkyl substituiertes Phenylen oder Naphthylen, einen Rest der Formeln

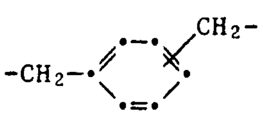

,

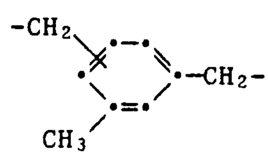

oder

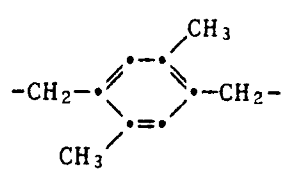

,

$R^2$ und $R^3$ unabhängig voneinander $C_1$-$C_{12}$-Alkyl, unsubstituiertes oder durch Halogen, Nitro, $C_1$-$C_4$-Alkyl oder $C_1$-$C_4$-Alkoxy einfach oder mehrfach substituiertes Phenyl oder Naphthyl, weiter $C_7$-$C_{13}$-Aralkyl bedeuten, oder worin $R^2$ und $R^3$, zusammen mit dem N-Atom, an das sie gebunden sind, einen 5-, 6- oder 7-gliedrigen heterocyclischen Ring bilden und $R^4$ und $R^5$ unabhängig voneinander Wasserstoff oder

$C_1$-$C_8$-Alkyl darstellen und

d) gegebenenfalls einen Füllstoff und/oder weitere technisch übliche Zusatzstoffe.

Vorzugsweise enthalten die erfindungsgemässen Reaktivsysteme als Epoxidharze a) Polyepoxidverbindungen, insbesondere solche aus aliphatischen, cycloaliphatischen oder aromatischen Epoxiden oder Mischungen davon.

Als Epoxidharze a) eignen sich alle Typen von Epoxidharzen, wie beispielsweise solche, die direkt an Sauerstoff-, Stickstoff- oder Schwefelatome gebundene Gruppen der Formel II

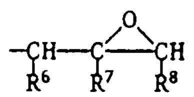

(II)

worin entweder $R^6$ und $R^8$ je ein Wasserstoffatom darstellen, in welchem Fall $R^7$ dann ein Wasserstoffatom oder eine Methylgruppe bedeutet, oder $R^6$ und $R^8$ zusammen $-CH_2CH_2-$ oder $-CH_2CH_2CH_2-$ darstellen, in welchem Fall $R^7$ dann ein Wasserstoffatom bedeutet, enthalten.

Als Beispiele solcher Harze seien Polyglycidyl- und Poly($\beta$-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder $\beta$-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly-($\beta$-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Poly-(epichlorhydrin) aus acyclischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3-und aus Alkoholen mit aromatischen Kernen wie N,N-Bis-(2-hydroxyäthyl)-anilin und p,p′-Bis-(2-hydroxyäthylamino)-diphenylmethan herstellen. Man kann sie ferner aus einkernigen Phenolen wie Resorcin und Hydrochinon sowie mehrkernigen Phenolen wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol, mit Phenolen wie Phenol selbst und durch Chloratome oder Alkylgruppen mit jeweils bis zu neun Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4-methyl-aminophenyl)-methan erhalten werden, Triglycidylisocyanurat sowie N,N′-Diglycidyl-derivate von cyclischen Alkylenharnstoffen wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen wie Aethan-1,2-dithiol und Bis-(4-mercaptomethylphenyl)-äther.

Beispiele für Epoxidharze mit Gruppen der Formel II, worin $R^6$ und $R^8$ zusammen eine $-CH_2CH_2-$ Gruppe bedeuten, sind Bis-(2,3-epoxycyclopentyl)-äther, 2,3-Epoxycyclopentyl-glycidyläther, 1,2-Bis-(2,3-epoxycyclopentyloxy)-äthan und 3,4-Epoxycyclohexylmethyl-3′,4′-epoxycyclohexancarboxylat.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidyläther/Glycidylester der Salicylsäure oder p-Hydroxybenzoesäure, N-Glycidyl-N′-(2-glycidyloxypropyl)5,5-dimethylhydantoin und 2-Glycidyloxy-1,3-bis-(5,5-dimethyl-1-glycidyl-hydantoinyl-3)propan.

Speziell bevorzugt werden Novolak-Epoxidharze und Polyoxyalkylenglykolpolyglycidylether.

Als Isocyanatharze b) enthalten die erfindungsgemässen Reaktivsysteme vorzugsweise Polyisocyanatverbindungen, insbesondere solche aus aliphatischen, cycloaliphatischen oder aromatischen Isocyanaten

oder Mischungen davon.

Bevorzugt werden Isomerengemische aus 4,4'- und 2,4'-Diphenylmethandiisocyanat, polyolmodifizierte Polyisocyanate und Gemische von flüssigen Polyisocyanaten mit höhermolekularen Polyisocyanaten oder Carbodiimid-Polyisocyanaten eingesetzt.

Weitere verwendbare Polyisocyanate sind beispielsweise Hexan-1,6-diisocyanat, Cyclohexan-1,3-diisocyanat und Isomere, 4,4'-Dicyclohexylmethandiisocyanat, 3-Isocyanatomethyl-3,5,5-trimethylcyclohexylisocyanat, 1,3-Dimethylbenzol-ω,ω'-diisocyanat und Isomere, 1-Methylbenzol-2,4-diisocyanat und Isomere, Naphthalin-1,4-diisocyanat, Diphenylether-4,4'-diisocyanat und Isomere, Diphenylsulfon-4,4'-diisocyanat und Isomere sowie tri- oder höherfunktionelle Isocyanate, wie beispielsweise 3,3',4,4'-Diphenylmethantetraisocyanat. Ferner können auch Isocyanate verwendet werden, die in üblicher Weise mit Phenol oder Kresol maskiert sind. Dimere und Trimere der genannten mehrwertigen Isocyanate sind ebenfalls einsetzbar. Derartige Polyisocyanate besitzen endständige freie Isocyanatgruppen und enthalten einen oder mehrere Uretdion- und/oder Isocyanuratringe. Verfahren zur Herstellung verschiedener Arten solcher Trimerer und Uretdione sind beispielsweise in den US-Patentschriften 3 494 888, 3 108 100 und 2 977 370 beschrieben.

In den erfindungsgemässen Reaktionsbeschleunigern c) kann $R^1$, wenn $R^1$ $-(CH_2)_n-$ mit $n = 2\text{-}24$ darstellt, beispielsweise Ethylen, Propylen, Tetramethylen, Octamethylen, Decamethylen, Heptadecylmethylen, Eicosamethylen oder Tetracosamethylen bedeuten.

Weiter, wenn $R^1$ durch Halogen substituiertes Phenylen oder Naphthylen darstellt, handelt es sich um einfach oder mehrfach, insbesondere mehrfach, substituiertes Phenylen oder Naphthylen, wobei die Substitution an jeder Stelle möglich ist. Die Halogen-Substituenten sind vorzugsweise Chlor und Brom.

Stellt $R^1$ durch Nitro substituiertes Phenylen oder Naphthylen dar, so kann die Substitution einfach oder mehrfach, insbesondere einfach, und an jeder Stelle möglich sein.

Stellt $R^1$ durch $C_1$-$C_4$-Alkyl substituiertes Phenylen oder Naphthylen dar, so kann die Substitution einfach oder mehrfach, vorzugsweise einfach, und in jeder Position möglich sein. Bei den $C_1$-$C_4$-Alkyl-Substituenten handelt es sich z.B. um Methyl, Ethyl, n-Propyl, Isopropyl, n-Butyl, Isobutyl, sec.-Butyl oder tert.-Butyl.

Stellt $R^1$ durch $C_1$-$C_4$-Alkoxy substituiertes Phenylen oder Naphthylen dar, so kann die Substitution einfach oder mehrfach, insbesondere einfach, und in jeder Position möglich sein. Als $C_1$-$C_4$-Alkoxy-Substituenten kommen z.B. Methoxy, Ethoxy, n-Propoxy, Isopropoxy, n-Butoxy, Isobutoxy, sec.-Butoxy oder tert.-Butoxy in Frage.

Stellt $R^1$ durch $C_3$-$C_8$-Dialkylaminoalkyl substituiertes Phenylen oder Naphthylen dar, so handelt es sich bei $C_3$-$C_8$ um die totale C-Zahl. Die Substitution kann ein- oder zweifach, insbesondere zweifach, sein. Beispiele für solche Substituenten sind Dimethylaminoethyl, Diethylaminobutyl- oder Dimethylaminomethyl-Substituenten.

Stellen $R^2$ und $R^3$ $C_1$-$C_{12}$-Alkyl dar, so handelt es sich um geradkettige oder verzweigte Alkylreste wie z.B. Methyl, Ethyl, n-Propyl, Isopropyl, n-Butyl, Isobutyl, sec.-Butyl, tert.-Butyl, verzweigtes oder geradkettiges Hexyl, Octyl, Nonyl oder Dodecyl.

Stellen $R^2$ und $R^3$ durch Halogen substituiertes Phenyl oder Naphthyl dar, handelt es sich um ein- oder mehrfach, insbesondere mehrfach, substituiertes Phenyl oder Naphthyl, wobei die Substitution an jeder Stelle möglich ist. Chlor- und Brom-Substituenten sind bevorzugte Halogensubstituenten.

Stellen $R^2$ und $R^3$ durch Nitro substituiertes Phenyl oder Naphthyl dar, so kann die Substitution einfach oder zweifach, insbesondere zweifach, und in jeder Position möglich sein.

Stellen $R^2$ und $R^3$ durch $C_1C_4$-Alkyl substituiertes Phenyl oder Naphthyl dar, so kann die Substitution ein- oder mehrfach, vorzugsweise einfach, und in jeder Position möglich sein. Als mögliche Alkylsubstituenten kommen beispielsweise Methyl, Ethyl, n-Propyl oder Isobutyl in Frage. Beispiele sind 2,4,6-Trimethylphenyl, 2,5-Dimethylphenyl, 3-Isopropylphenyl, 4-Methylphenyl, 3,4-Diethylphenyl, 2-Methylnaphthyl oder 2,6-Dimethylnaphthyl.

Stellen $R^2$ und $R^3$ durch $C_1$-$C_4$-Alkoxy substituiertes Phenyl der Naphthyl dar, so kann die Substitution einfach oder mehrfach, insbesondere einfach, und in jeder Position möglich sein. Als Substituenten kommen z.B. Methoxy, Ethoxy, n-Propoxy, Isopropoxy und n-Butoxy in Frage.

Beispiele für so substituierte Phenyle oder Naphthyle sind 4-n-Butoxyphenyl, 3,5-Dimethoxyphenyl oder 4-Ethoxynaphthyl.

Stellen $R^2$ und $R^3$ $C_7$-$C_{13}$-Aralkyl dar, so handelt es sich beispielsweise um Benzyl, 1- oder 2-Phenethyl, 3-Phenylpropyl, α,α-Dimethylbenzyl, 2-Phenylisopropyl, 2-Phenylhexyl oder Naphthylmethyl. Bevorzugt ist Benzyl.

Bilden $R^2$ und $R^3$ zusammen mit dem N-Atom, an das sie gebunden sind, einen 5-, 6- oder 7-gliedrigen heterocyclischen Ring, so handelt es sich beispielseise um Pyrrolidin-, Morpholin-, Piperazin-, 4-Methylpiperazin-, Piperidin- oder Perhydroazepin-Reste, bevorzugt jedoch um Morpholin-, Piperazin- oder Piperidin-Reste, insbesondere um den Morpholinrest.

Stellen $R^4$ und $R^5$ $C_1$-$C_8$-Alkyl dar, so handelt es sich um geradkettige oder verzweigte Alkylreste wie z.B. Methyl, Ethyl, n-Propyl, Isopropyl, n-Butyl, Isobutyl, sec.-Butyl, tert.-Butyl, geradkettiges oder verzweigtes Pentyl, Hexyl, Heptyl oder Octyl. Bevorzugt sind jedoch geradkettige Reste $R^4$ und $R^5$, insbesondere Methyl und Ethyl.

Bevorzugte Verbindungen der Formel I sind solche, worin $R^1$ $-(CH_2)_n-$ und n die Zahlen 2 bis 20, insbesondere 3 bis 6 bedeuten.

Ebenfalls von Interesse sind Verbindungen der Formel I, worin $R^2$ und $R^3$ unabhängig voneinander $C_1$-$C_5$-Alkyl, insbesondere Methyl oder Ethyl, bedeuten.

Besonders interessant sind Verbindungen der Formel I, worin $R^2$ und $R^3$ gleich sind.

Speziell bevorzugt sind Verbindungen der Formel I, worin $R^1$ Ethylen oder Propylen darstellen, $R^2$ und $R^3$ identisch sind und Methyl, Ethyl, Propyl oder Butyl bedeuten.

Die EP/IC-Harze können auch Komponenten enthalten, die im allgemeinen an den chemischen Reaktionen, die zu den gehärteten Formstoffen führen, nicht beteiligt sind. Als derartige Füllstoffe eignen sich mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit. Farbstoffe, Stabilisatoren und Haftvermittler sowie andere Additive üblicher Art können den EP/IC-Harzen ebenfalls zugesetzt werden.

Die reaktiven EP/IC-Harzsysteme, die durch die erfindungsgemässen Reaktionsbeschleuniger der Formel I gehärtet werden können, weisen vorzugsweise ein Ansatzmolverhältnis der Epoxid- und Isocyanatgruppen (EP:IC) von 0,1 bis 5 auf. Besonders bevorzugt ist ein EP:IC Verhältnis von 0,3 bis 2,5, insbesondere jedoch ein solches von 0,4 bis 1,0.

Diese reaktiven hitzehärtbaren EP/IC Harzsysteme werden als ungefüllte oder gefüllte Harzsysteme, besonders als Giess- und Imprägnierharze für die Elektrotechnik verwendet. (z.B. Herstellung von Stützisolatoren.)

Besonders bevorzugt ist die Giessharz-Verarbeitung in geschlossenen Systemen (Druckgelierverfahren). Dabei wird das Harzsystem bei Geliertemperaturen von 130 bis 150 ° C unter Druck vernetzt und bei Temperaturen von 150 bis 250 ° C nachgehärtet.

Es kann auch eine spritzgussanaloge Verarbeitung erfolgen.

Die Reaktionsbeschleuniger der Formel I werden diesen EP/IC-Harzreaktiysystemen zur Härtung zweckmässig in Mengen von 0,01-5,0 Gew.-%, vorzugsweise 0,1 bis 2,5 Gew.-%, insbesondere 0,1 bis 1,5 Gew.-%, bezogen auf die ungefüllte Giessharzmasse, zugesetzt.

Die erfindungsgemässen Reaktionsbeschleuniger der Formel I können z.B. nach der in der DE-OS 2,846,123 beschriebenen Weise hergestellt werden.

Beispiele für Reaktionsbeschleuniger sind in der nachfolgenden Tabelle 1 aufgeführt.

Tabelle 1

| Beispiel | Reaktionsbeschleuniger | Sdp. [°C] | Viskosität in Pa·s | $n_D^\alpha$ |
|---|---|---|---|---|
| 1 | 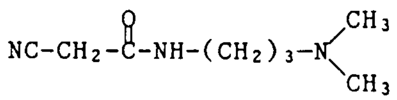 | 105-107/ 0,13 mbar | 140 | 1,4762 |
| 2 | 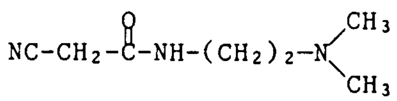 | 147/ 1,3 mbar | | |
| 3 | 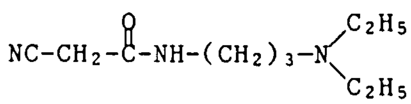 | 134°C/ 0,52 mbar | 125 | 1,4801 |
| 4 | 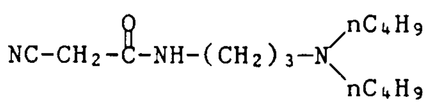 | 184/ 1,3 mbar | | |

Beispiel 5:

Als Reaktivharzsystem wird die folgende Basis Formulierung verwendet, wobei die Mengenangaben, wenn nichts anderes angegeben steht in Gewichtsteilen oder Gewichtsprozenten angegeben sind.

| | |
|---|---|
| Novolak-Epoxidharz (5,7 Aeq./kg) | 100 |
| Polypropylenglykoldiglycid (2,55 Aeq./kg) | 100 |
| p,p-Diisocyanatodiphenylmethan (7,8 Aeq./kg) | 250 |
| Reaktionsbeschleuniger | 1/30 Mol/Epoxid |
| aus Beispiel 1 | 4.2 |
| Quarzmehl W 12 (für gefüllte Harzsysteme) | 836 |

A) Wärmealterung

Die Komponenten Novolak-Epoxidharz, Polypropylenglykoldiglycid und p,p-Diisocyanatodiphenylmethan werden in einem Metallbehälter eingewogen. Das Gemisch wird auf 100 °C erwärmt, worauf der Reaktionsbeschleuniger sowie ein Tropfen Glassomax® 580-1501 (Glasorit-Werke, Hamburg) als Entschäumungsmittel zugegeben wird.

Die Reaktionsmischung wird mit einer mechanischen Rührvorrichtung (Motor mit Propeller-Rührer) während 2 bis 3 Min. gerührt und anschliessend während ca. 5 Min. entgast (Pumpenleistung ca. 500 l/Min., ca. 0,1 mbar) und bei ungefähr 80 °C in eine auf 100 °C vorgewärmte 3 mm-Form gegossen und während 4 Std. bei 140 °C und 16 Std. bei 200 °C ausgehärtet.

Nach der Entformung werden Prüfkörper der Dimension 15x10x3 mm herausgeschnitten und zur Erfassung des Gewichtsverlustes bei 180 °C herangezogen.

Zur Beurteilung der Wärmealterung werden Reinharzproben während 56 Tagen bei 180 °C gelagert und am Ende dieser Zeit der Gewichtsverlust gemessen.

Resultat:

Der Gewichtsverlust beträgt 1,86 %.

B) Gebrauchsdauermessung

Hierzu werden gefüllte Formulierungen verwendet. Die Harzkomponenten werden wie unter A) beschrieben eingewogen und auf 100 °C erwärmt. Dann wird der auf 100 °C vorgeheizte Füllstoff zugegeben. Erst danach wird der Reaktionsbeschleuniger beigefügt. Die Weiterverarbeitung erfolgt gemäss der unter A) angegebenen Methode. Die Messungen zur Bestimmung der Gebrauchsdauer werden nach der Höppler-Kugelfall-Messmethode bei 80 °C vorgenommen.

Die Resultate sind in Tabelle 2 wiedergegeben.

Tabelle 2

| Zeit [min] | 0 | 5 | 10 | 20 | 30 | 34 |
|---|---|---|---|---|---|---|
| Viskosität [mPa•s] | 15000 | 15500 | 16000 | 18000 | 18500 | 19000 |

Die Resultate aus Tabelle 2 zeigen deutlich den langsamen Viskositätsaufbau für die mit dem erfindungsgemässen Reaktionsbeschleuniger versetzten Reaktivharzsysteme, wie er im Sinne einer langen Gebrauchsdauer sehr erwünscht ist.

**Patentansprüche**

**1.** Hitzehärtbare Reaktivsysteme enthaltend
a) mindestens ein Epoxidharz
b) mindestens ein Isocyanatharz
c) einen Reaktionsbeschleuniger der Formel I,

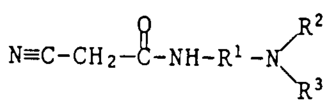 I

worin $R^1$ $-(CR^4R^5)_n-$ mit n = 2-24,
unsubstituiertes oder durch ein oder mehrere Halogen, Nitro, $C_1$-$C_4$-Alkyl, $C_1$-$C_4$-Alkoxy oder $C_3$-$C_8$-Dialkylaminoalkyl substituiertes Phenylen oder Naphthylen, einen Rest der Formeln

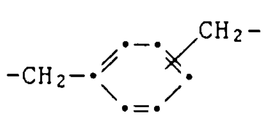 , 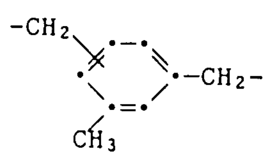 oder 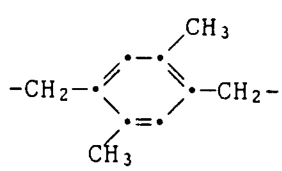 ,

$R^2$ und $R^3$ unabhängig voneinander $C_1$-$C_{12}$-Alkyl, unsubstituiertes oder durch Halogen, Nitro, $C_1$-$C_4$-Alkyl oder $C_1$-$C_4$-Alkoxy einfach oder mehrfach substituiertes Phenyl oder Naphthyl, weiter $C_7$-$C_{13}$-Aralkyl bedeuten, oder worin $R^2$ und $R^3$, zusammen mit dem N-Atom, an das sie gebunden sind, einen 5-, 6- oder 7-gliedrigen heterocyclischen Ring bilden und $R^4$ und $R^5$ unabhängig voneinander Wasserstoff oder $C_1$-$C_8$-Alkyl darstellen und
d) gegebenenfalls einen Füllstoff und/oder weitere technisch übliche Zusatzstoffe.

**2.** Reaktivsysteme gemäss Anspruch 1, worin das Epoxidharz eine Polyepoxidverbindung darstellt.

**3.** Reaktivsysteme gemäss Anspruch 2, worin die Polyepoxidverbindung aliphatische, cycloaliphatische oder aromatische Epoxide oder Mischungen davon bedeutet.

**4.** Reaktivsysteme gemäss Anspruch 2, worin die Polyepoxidverbindung ein Novolak-Epoxidharz und/oder ein Polyoxyalkylenglykolpolyglycidylether ist.

**5.** Reaktivsysteme gemäss Anspruch 1, worin das Isocyanatharz eine Polyisocyanatverbindung ist.

**6.** Reaktivsysteme gemäss Anspruch 5, worin die Polyisocyanatverbindung aliphatische, cycloaliphatische oder aromatische Isocyanate oder deren Mischungen bedeutet.

**7.** Reaktivsysteme gemäss Anspruch 5, worin die Polyisocyanatverbindung ein Isomerengemisch von 4,4'- und 2,4'-Diphenylmethandiisocyanat, polyolmodifiziertes Polyisocyanat oder ein Gemisch von flüssigen Polyisocyanaten mit höhermolekularen Polyisocyanaten oder Carbodiimid-Polyisocyanaten darstellt.

**8.** Reaktivsysteme gemäss Anspruch 1, worin in der Verbindung der Formel I $R^1$-$(CH_2)_n$- und n die Zahlen 2 bis 20 bedeuten.

**9.** Reaktivsysteme gemäss Anspruch 8, worin in den Verbindungen der Formel I n die Zahlen 3 bis 6 darstellt.

**10.** Reaktivsysteme gemäss Anspruch 1, worin in den verbindungen der Formel I $R^2$ und $R^3$ unabhängig voneinander $C_1$-$C_5$-Alkyl bedeuten.

**11.** Reaktivsysteme gemäss Anspruch 10, worin in den verbindungen der Formel I $R^2$ und $R^3$ unabhängig voneinander Methyl oder Ethyl bedeuten.

**12.** Reaktivsysteme gemäss Anspruch 10, worin in den Verbindungen der Formel I $R^1$ Ethylen oder Propylen darstellt, $R^2$ und $R^3$ identisch sind und Ethyl, Propyl oder Butyl bedeuten.

**13.** Reaktivsysteme gemäss Anspruch 1, worin der Reaktionsbeschleuniger der Formel I in einer Menge von 0,01-5,0 Gew.-%, bezogen auf die ungefüllte Giessharzmasse, dem Reaktivsystem zugesetzt wird.

**14.** Reaktivsysteme gemäss Anspruch 1, worin der Füllstoff mineralisch und/oder faserförmig ist.

**15.** Reaktivsysteme gemäss Anspruch 14, worin als Füllstoff Quarzmehl, Quarzgut, Aluminiumoxid oder Dolomit verwendet wird.

**16.** Reaktivsysteme gemäss Anspruch 1, worin als technisch übliche Zusatzstoffe Farbstoffe, Pigmente, Stabilisatoren und/oder Haftvermittler eingesetzt werden.

**17.** Verwendung von Reaktionsbeschleunigern der Formel I nach Anspruch 1 zur Härtung von Reaktionsharzmischungen aus Polyepoxiden und Polyisocyanaten.

## Claims

**1.** A heat-curable reactive system, comprising

a) at least one epoxide resin,
b) at least one isocyanate resin,
c) a reaction accelerator of the formula I

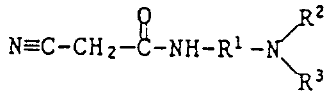

I

in which $R^1$ is $-(CR^4R^5)_n-$ with n = 2-24, naphthylene or phenylene which is unsubstituted or mono- or poly-substituted by halogen, nitro, $C_1$-$C_4$alkyl, $C_1$-$C_4$alkoxy or $C_3$-$C_8$dialkylaminoalkyl, or a radical of the formula

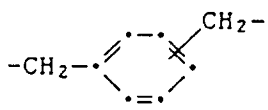 , 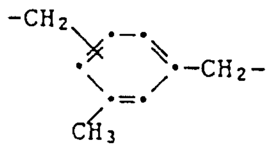 or 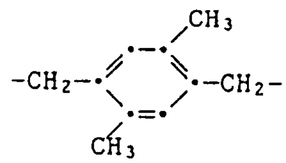 ,

$R^2$ and $R^3$ independently of one another are $C_1$-$C_{12}$alkyl, naphthyl or phenyl which is unsubstituted or mono- or poly-substituted by halogen, nitro, $C_1$-$C_4$alkyl or $C_1$-$C_4$alkoxy, or are $C_7$-$C_{13}$aralkyl, or in which $R^2$ and $R^3$, together with the N atom to which they are linked, form a 5-membered, 6-membered or 7-membered heterocyclic ring, and $R^4$ and $R^5$ independently of one another are hydrogen or $C_1$-$C_8$alkyl, and

d) if appropriate, a filler and/or further additives conventional in industry.

**2.** A reactive system according to claim 1, wherein the epoxide resin is a polyepoxide compound.

**3.** A reactive system according to claim 2, wherein the polyepoxide compound comprises aliphatic, cycloaliphatic or aromatic epoxides or mixtures thereof.

**4.** A reactive system according to claim 2, wherein the polyepoxide compound is a novolak epoxide resin and/or a polyoxyalkylene glycol polyglycidyl ether.

**5.** A reactive system according to claim 1, wherein the isocyanate resin is a polyisocyanate compound.

**6.** A reactive system according to claim 5, wherein the polyisocyanate compound comprises aliphatic, cycloaliphatic or aromatic isocyanates or mixtures thereof.

**7.** A reactive system according to claim 5, wherein the polyisocyanate compound is an isomer mixture of 4,4'- and 2,4'-diphenylmethane diisocyanate, polyol-modified polyisocyanate or a mixture of liquid polyisocyanates with higher molecular weight polyisocyanates or carbodiimide polyisocyanates.

**8.** A reactive system according to claim 1, wherein $R^1$ in the compound of the formula I is $-(CH_2)_n-$ and n is a number from 2 to 20.

**9.** A reactive system according to claim 8, wherein n in the compounds of the formula I is a number from 3 to 6.

**10.** A reactive system according to claim 1, wherein $R^2$ and $R^3$ in the compounds of the formula I independently of one another are $C_1$-$C_5$alkyl.

**11.** A reactive system according to claim 10, wherein $R^2$ and $R^3$ in the compounds of the formula I independently of one another are methyl or ethyl.

**12.** A reactive system according to claim 10, wherein $R^1$ in the compounds of the formula I is ethylene or propylene, and $R^2$ and $R^3$ are identical and are ethyl, propyl or butyl.

**13.** A reactive system according to claim 1, wherein the reaction accelerator of the formula I is added to the reactive system in a quantity of 0.01-5.0% by weight, relative to the unfilled casting resin composition.

**14.** A reactive system according to claim 1, wherein the filler is of mineral and/or fibrous type.

**15.** A reactive system according to claim 14, wherein powdered silica, fused silica, alumina or dolomite is used as the filler.

**16.** A reactive system according to claim 1, wherein dyes, pigments, stabilizers and/or adhesion promoters are used as additives conventional in industry.

**17.** The use of reaction accelerators of the formula I, according to claim 1, for hardening reactive resin mixtures of polyepoxides and polyisocyanates.

## Revendications

**1.** Systèmes réactifs thermodurcissables, contenant

a) au moins une résine époxyde,

b) au moins une résine d'isocyanate,

c) un accélérateur de réaction de formule (I),

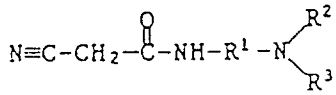

I

où $R_1$ est $-(CR^4R^5)_n-$, avec n = 2-24, un radical phénylène ou naphtylène, non substitué ou substitué par un ou plusieurs substituants halogéno, nitro, alkyle en $C_1$-$C_4$, alcoxy en $C_1$-$C_4$ ou dialkylaminoalkyle en $C_3$-$C_8$, ou encore un radical ayant les formules suivantes :

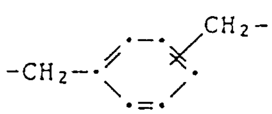 , 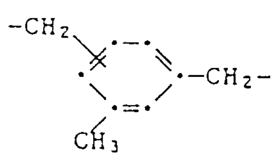 ou 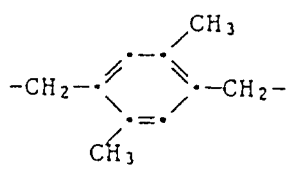 ,

$R^2$ et $R^3$, indépendamment l'un de l'autre, sont chacun un radical alkyle en $C_1$-$C_{12}$, un radical phényle ou naphtyle non substitué, ou substitué une ou plusieurs fois par des substituants halogéno, nitro, alkyle en $C_1$-$C_4$ ou alcoxy en $C_1$-$C_4$, et de plus un radical aralkyle en $C_7$-$C_{13}$, ou bien

où $R^2$ et $R^3$, avec l'atome d'azote auquel ils sont liés, forment un noyau hétérocyclique à 5, 6 ou 7 chaînons, et $R^4$ et $R^5$, indépendamment l'un de l'autre, sont chacun un hydrogène ou un radical alkyle en $C_1$-$C_8$, et

d) éventuellement une charge et/ou d'autres additifs usuels dans la technique.

**2.** Systèmes réactifs selon la revendication 1, dans lesquels la résine époxyde est un composé polyépoxydique.

**3.** Systèmes réactifs selon la revendication 2, dans lesquels le composé polyépoxydique est un époxyde aliphatique, cycloaliphatique ou aromatique, ou un de leurs mélanges.

**4.** Systèmes réactifs selon la revendication 2, dans lesquels le composé polyépoxydique est une novalaquerésine époxyde et/ou un éther polyglycidylique d'un polyoxyalkylèneglycol.

**5.** Systèmes réactifs selon la revendication 1, dans lesquels la résine d'isocyanate est un polyisocyanate.

**6.** Systèmes réactifs selon la revendication 5, dans lesquels le polyisocyanate est un isocyanate aliphatique, cycloaliphatique ou aromatique ou un de leurs mélanges.

**7.** Systèmes réactifs selon la revendication 5, dans lesquels le polyisocyanate est un mélange d'isomères du diisocyanate de 4,4'- et de 2,4'-diphénylméthane, un polyisocyanate modifié par un polyol ou un mélange de polyisocyanates liquides et de polyisocyanates à grande masse moléculaire, ou encore un polyisocyanate de carbodiimide.

**8.** Systèmes réactifs selon la revendication 1, dans lesquels, dans le composé de formule (I), $R^1$ est $-(CH_2)_n-$,et n est un nombre de 2 à 20.

**9.** Systèmes réactifs selon la revendication 8, dans lesquels, dans les composés de formule (I), n est un nombre de 3 à 6.

**10.** Systèmes réactifs selon la revendication 1, dans lesquels, dans les composés de formule (I), $R^2$ et $R^3$, indépendamment l'un de l'autre, sont chacun un radical alkyle en $C_1$-$C_5$.

**11.** Systèmes réactifs selon la revendication 10, dans lesquels, dans les composés de formule (I), $R^2$ et $R^3$, indépendamment l'un de l'autre, sont chacun un radical méthyle ou éthyle.

**12.** Systèmes réactifs selon la revendication 10, dans lesquels, dans les composés de formule (I), $R^1$ est un radical éthylène ou propylène, $R^2$ et $R^3$ sont identiques, et sont chacun le radical éthyle, propyle ou butyle.

**13.** Systèmes réactifs selon la revendication 1, dans lesquels l'accélérateur de réaction de formule (I) est ajouté au système réactif en une quantité de 0,01 à 5,0 % en poids par rapport à la masse de résine de coulée non chargée.

**14.** Systèmes réactifs selon la revendication 1, dans lesquels la charge est minérale et/ou fibreuse.

**15.** Systèmes réactifs selon la revendication 14, dans lesquels on utilise comme charges de la poudre de quartz, de la silice fondue, de l'alumine ou de la dolomite.

**16.** Systèmes réactifs selon la revendication 1, dans lesquels on utilise comme additifs techniquement courants des colorants, des pigments, des stabilisants et/ou des promoteurs d'adhérence.

**17.** Utilisation d'accélérateurs de réaction de formule (I) selon la revendication 1 pour durcir des mélanges de résines réactives constitués de polyépoxydes et de polyisocyanates.